# EUROPEAN PATENT APPLICATION

(11) **EP 1 773 040 A1**
(43) Date of publication of application: **11.04.2007**
(21) Application number: 05256146.1
(22) Date of filing: 30.09.2005
(51) Int. Cl.: H04M 3/56, H04M 3/42, H04M 1/656

(54) **Audio conference buffering system with proximity detector**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

The present invention relates to the provision of audio or other media information e.g. during a conference call, or listening to an IVR to a user of a telephone. The present invention provides a method of controlling the provision of media information from a media source (160) to the user (150) of a telephone (100) having a loudspeaker or media transducer (105) for outputting or transducing the voice or media information. The method (200) comprises receiving media information from the media source (205), buffering the received audio information in response to determining a user non-proximity condition (220,225N), transducing the buffered media information in response to determining a user proximity condition (225Y,230). In particular buffering the audio output of a conference call when a proximity sensor (110) detects that the subscriber does not have the telephone next to the ear and playing back the buffered audio signal as soon as the proximity of the ear is sensed.

## Description

### Field of the Invention

The present invention relates to the provision of media information to a user of an electronics device, for example audio and/or video information.

### Background of the Invention

Voice communications are ubiquitous, using devices as diverse as satellite phones, mobile phones, analogue phones using twisted pair cables, and Voice over Internet Protocol (VoIP) phones implemented by software executed on a personal computer. Such phones typically receive and transmit a narrow-band analogue or digital audio signal comprising sufficient bandwidth to carry the significant portions of a voice.

Voice communications have also been extended to allow the possibility of more than two users on a voice call, by providing an audio channel shared between three or more users. These conference calls are useful for communication between people in disparate locations, and can therefore limit travelling requirements. With conference calling however, have come new problems. With increasing numbers of people involved in a conference call, the salient parts of the call for each participant may be quite small compared with the overall length of the call. This is an inefficient use of participant's time. It may also encourage participants to try to multi-task during a conference call, for example attending to email correspondence or briefly conferring with a local colleague away from the conference call, which can result in the participant missing a relevant part of the call.

### Summary of the Invention

In general terms the present invention provides a method and system for controlling the provision of media information received from an external media. In an embodiment the media information is audio information and the media source is an audio source such as a conference call bridge. However the provision of video or other media information could also be so controlled A user attention condition is detected at the receiving device which is used to control the flow of media or audio information between the source and the user, and including buffering of received media or audio information when the user condition corresponds to the user not attending to the flow of media or audio information - for example a conference call. The user attention condition may be related to the state of a manually operated "pause" control, or an automatically detected user attention or non-attention state according to a proximity condition associated with the closeness or otherwise of the user's ear from the speaker of a phone conveying the media or audio information, or the detection of predetermined movements of the phone.

This arrangement allows a user to attend to other tasks during a flow of media or audio information, for example briefly conferring with a local colleague during a conference call, the media or audio information received during this break being buffered for the user to listen to (or watch) when they return from the interruption. This reduces the risk of missing important information, whilst still allowing the user to attend to other tasks.

The buffered or stored audio or other media information can then be replayed at a faster rate or be compressed in order for the user to "catch up" with the real-time audio or other media information flow.

The flow of audio (or other media) information may be uni-directional from the audio source to the electronics device such as in a media streaming application, or it may be part of a duplex communications channel for interactive applications such as telephone conference calls. In either case, the audio channel can be a telecommunications or voice centric channel such as a PSTN (public switched telephone network), cellular or VoIP (voice over internet protocol) channel.

Example applications include handling audio conference interruptions, and streaming audio interruptions, for example listening to an internet radio broadcast. Other application are also possible, for example interacting with an audio based automated system such as a interactive voice response (IVR) system, which may require a user of a unitary phone having integrated keypad and speaker to actuate keys on the phone away from the user's ear and thus risking the user missing some audio information from the automated system. This may also apply to communication with non-automated sources such as another person who continues to talk after they have given their phone details or a meeting date to the user who then has to enter these into their phone using the keys. The other person's further conversation, perhaps further conditions attached to the meeting, is then buffered for playing back to the user after they have finished actuating the keys. Similarly, when a user is talking with another caller and trying to find information in a briefcase for example, and the phone is dropped, the missed conversation can be recovered.

The "pause" control may simply be a button or key on the phone which the user toggles to start buffering incoming audio information such as voice or to start replay of buffered audio information. The proximity condition can be detected by a proximity sensor in the phone speaker piece which can detect the presence or absence of an object such as the user's head, from which it can be inferred whether or not the user is in a listening position.

In an embodiment a proximity sensor such as an infra-red or capacitance sensor is located in a phone adjacent the phones audio transducer or speaker and is arranged to detect whether or not an object (eg the user's head) is within a predetermined range of the phone. Such a (user proximity) condition can be used to indicate that the user is now ready to receive audio information. Similarly a sensor not being able to detect an object within a predetermined range can indicate that the audio information should now be buffered - a non-proximity condition.

A change in the sensor's status, for example that an object is now within the predetermined range, can be forwarded to control functionality within the phone in order to activate the on-board buffer, or the play-back application which may include compression, faster than real-time playback in order for the audio information the user hears to catch-up with the real-time received audio information. This may be indicated with a tone or other indication to the user.

In another embodiment, motion sensors are used to detect movement and rotation of a phone in order to correlate these with known movement sequences corresponding to certain proximity conditions, such as the user having moved the phone from a key actuation position (a user non-proximity condition) to a listening position (a user proximity condition).

In alternative embodiments, the buffered audio information may be simply played back in the same way it was received, for example at the same speed. This may be sufficient when interacting with voice prompt systems which deliver a predetermined voice prompt and await a response. In another alternative, the buffering may occur at another location, for example a central server such as a teleconference server or gateway, in which case the user's phone sends control signals to the remote buffer to start buffering or start playback as appropriate. The control signal may be implemented as an in-band audio signal such as a unique DMTF tone sequence.

The length of the buffering will be dependent on the application, but might include for example a capacity of approximately 3 minutes for delayed non-interactive audio or interactive phone conference audio.

In one aspect there is provided a method of delaying media or audio signals between a media or audio source and an electronics device having a media or audio transducer for transducing the media or audio signals for a user of the device. The method comprises receiving media or audio data from the media or audio source at the electronics device, buffering the media or audio data in response to detecting a user non-attention condition, and transducing the buffered media or audio data in response to detecting a user attention condition.

In another aspect there is provided a method of controlling the provision of audio information from an audio source such as a phone conference server to the user of an electronics device such as a phone having an audio transducer for transducing the audio information. The method comprises receiving audio information from the audio source, buffering the received audio information in response to determining a user non-proximity condition; and transducing the buffered audio information in response to determining a user proximity condition.

The proximity condition can be determined by detecting an object within a predetermined range of the audio transducer. Alternatively or additionally predetermined movement sequences can be detected and used to infer the user proximity condition. Non-automatic methods of determining a user attention condition can be used such as a user/manually operable switch.

The buffered audio information can be time compressed before transducing in order to allow a user to "catch-up" with real-time received audio information.. The buffering may be terminated after a predetermined amount of audio information is buffered and the buffered audio information is discarded, in order to revert to transducing real-time received audio information.

The audio information may be received over a duplex audio channel, or a simplex audio channel. These channels may be voice centric or telecommunications types channels such as PSTN or cellular or VoIP.

In another aspect there is provided a method of controlling the provision of audio information from an audio source to the user of an electronics device having an audio transducer for transducing the audio information. The method comprises establishing a duplex audio communications channel between the audio source and the electronics device and receiving audio information from the audio source over said channel, buffering the received audio information in response to determining a user non-attention condition, and transducing the buffered audio information in response to determining a user attention condition.

The user non-attention and attention conditions may be determined according to a proximity condition detected by a proximity sensor, for example that an object is within a certain range. The user non-attention and attention conditions may be determined automatically by the electronics device, or using a non-automatic mechanism such as a user operable switch.

In another aspect there is provided a method of controlling the provision of audio information from an audio source to the user of an electronics device having an audio transducer for transducing the audio information. The method comprises receiving audio information from the audio source, buffering the received audio information in response to determining a user non-attention condition, and transducing the buffered audio information in response to determining a user attention condition; wherein determining of the user non-attention and/or attention conditions is achieved automatically by the device.

For example the user non-attention and attention conditions may be determined according to a proximity condition detected by a proximity sensor.

The audio information may be received by establishing a duplex audio channel for additionally transmitting audio information from the electronics device to the audio source.

In another aspect there is provided a device for controlling the provision of audio information from an audio source to a user. The device comprises an audio transducer for transducing the audio information, a receiver for receiving audio information from the audio source, a buffer circuit arranged to buffer the received audio information in response to determining a user non-attention condition, and the device being arranged to transduce the buffered audio information in response to determining a user attention condition.

The user attention and non-attention conditions may be automatically detected by the device, using sensor readings for example, or it may be indicated manually be a user operable switch. The user attention and non-attention conditions may be corresponding user proximity or non-proximity conditions, being detected by proximity sensors for example. The received audio information may be transferred over a telecommunications types of channel, including for example a duplex channel.

Whilst the control of the provision of audio information has been predominantly described, it will be understood that the methods and devices described herein could equally be applied to the provision of other media information with or without appropriate modifications as would be understood by those skilled in the art. An example of other media information is video information such as might be used in TV broadcast or video conference call applications.

### Brief Description of the Drawings

Embodiments will now be described with reference to the following drawings, by way of example only and without intending to be limiting, in which:
Figure 1 is a schematic illustrating a system according to an embodiment;
Figure 2 is a flow chart illustrating a method according to an embodiment;
Figure 3 illustrates a phone according to an embodiment;
Figure 4a illustrates attending and non-attending positions for a user of a mobile phone; and
Figure 4b illustrates rotational movements the phone may go through whilst moving between the two positions of figure 4a.

### Detailed Description

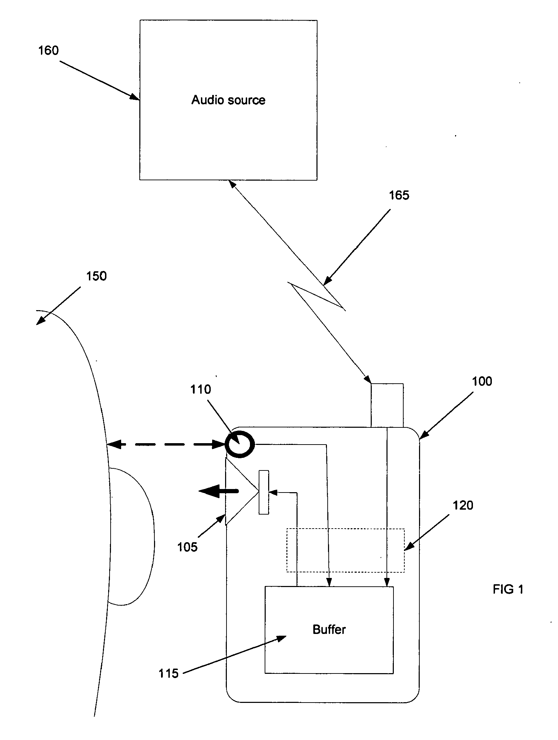

Referring to figure 1, a system according to an embodiment is shown and which comprises an electronics device such as a mobile phone 100, and an audio source 160 such as a conference call server or audio media streaming server. The mobile phone 100 and audio server 160 are connected by a wireless link 165, which provides an audio or voice channel between the audio source 160 and the remote electronics device 100. The electronic device 100 may be any type of phone, including a wired rather than wireless phone, a PDA, laptop or desktop computer, or any other electronic device capable of receiving and transducing audio information or signals from an audio source.

The device 100 is used by a user 150 to receive and transduce the audio signals into sound receivable by the user 150. The phone device 100 comprises a speaker 105 or similar transducer for transducing the received audio signals, a proximity sensor 110 for detecting the presence of the user 150, and a buffer 115 for buffering received audio signals.

When the proximity sensor 110 detects an object such as the user's head, this is determined to be a user attention or proximity condition and the audio signals received from the audio source 160 are relayed directly to the audio transducer 105 such that the user hears them in real-time. However when the proximity sensor 110 does not detect a nearby object, for example within a predetermined range, this is determined to be a user non-attention or non-proximity condition and the received audio signals are stored in the buffer 115. When the proximity sensor again detects an object 150, the buffered audio signals are forwarded to the audio transducer 105 for playing to the user 150.

The buffered audio signals may first be processed using established techniques to temporally compress stored speech and allow it to be played faster than real-time. The received audio may be processed before storing by the buffer, or after the user has returned to the phone triggering play-back of the buffered audio information. Depending on configuration of the device, the type of processing may depend on the length or amount of buffered audio data. Examples of speech compression include MIT's speech skimmer described in "SpeechSkimmer: A System for Interactively Skimming Recorded Speech", Barry Arons, ACM Transactions on Computer-Human Interaction, Volume 4, Number 1, March 1997, pages 3-38, and available at for example http://xenia.media.mit.edu/~barons/tochi97.html, and the Mach1 speech time compression algorithm described in "Mach1: Non-uniform Time-Scale Modification of Speech", Michele Covell et al, Proceedings of the IEEE International Conference on Acoustics, Speech and Signal Processing, May 12-15, 1998, and available for example at http://rvl4.ecn.purdue.edu/∼malcolm/interval/1997~060/mach1-icassp.pdf

For non-interactive audio information such as a web-cast, the catch-up aspect may not be required and the audio information can continue to be played with a delay corresponding to the duration of the user non-attention condition. With an audio interactive session such as a conference call, catching-up to the real-time received audio information is desirable. For the interactive session, this can be implemented using a continuous looping buffer of say 3x seconds length, and allow a user to be able to leave the call for up to x seconds. The user may then catch up with the real time audio by playing out the 3x seconds when the phone is put back next to the user's ear, the buffered 3x seconds of audio information being compressed over 2x seconds. A "catch-up" or "maintain delay" control may be used by the user to indicate their preferred method of controlling the buffered audio information, or this could be configured automatically by the system depending on the application.

The phone 100 also includes control functionality 120 typically implemented by software installed on the phone and which operates according to the proximity sensor or detector output. The proximity sensor 110 is arranged to detect the presence or absence of an object adjacent the speaker 105 of the phone 100 - for example the user's head 150. By detecting the proximity of the user's head, the sensor 110 is able to indicate that the phone 100 has been returned to a listening position, such that the user is now ready to receive further audio information from the buffer 115. Using this information, the device 100 can be arranged to delay the transducing or playing of received audio information until the user 150 is ready to receive it - ie the phone 100 has been returned to a listening position.

The control functionality or block 120 monitors the output of the sensor 110 and interprets this as a user attention condition for the phone 100 - for example nearby object as detected by the sensor 110 corresponds to a listening position or user proximity condition, and no nearby object detected by the sensor 110 corresponds to a key actuation position or user non-proximity condition. Sensor readings may be monitored in order to determine whether an object has just been detected within a predetermined range, or an object has just moved outside the predetermined range. A suitable range might be 5 cm for example.

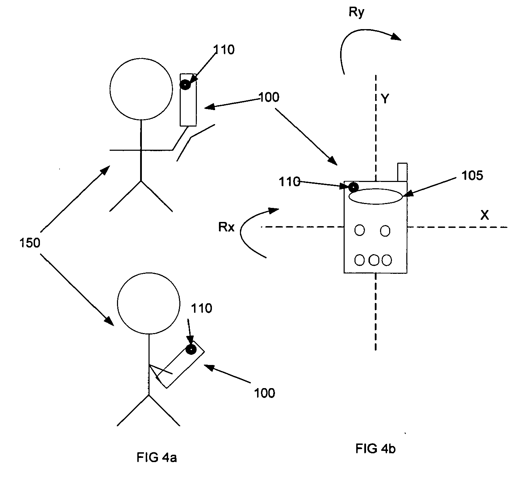

An example of a user attention and a user non-attention condition are illustrated in Figure 4a. This shows a user 150 of a mobile phone 100 actuating keys on the phone with the speaker 105 of the phone away from the user's ear - a user non-attention condition or non-listening position in the lower diagram. In the upper diagram the user 150 has the mobile phone 100 adjacent their head which can be detected by the proximity sensor 110 - a user attention condition or listening position. Other examples of user non-attention conditions might include the user 150 leaving the phone on a desktop (with the speaker and proximity sensor facing upwards) whilst attending to papers on the desk, a dropped phone, a phone or PDA placed in a pocket.

The user attention and non-attention conditions are determined automatically by the device using the proximity sensor 110 outputs. Other methods of automatically detecting user attention conditions include detecting device movements, for example using accelerometers or other movement sensors as described in more detail below. These may be used to infer a user proximity or attention condition. Other automatic methods may also be used, for example the detection of background noise levels.

User attention and non-attention conditions are not limited to user proximity and automatic user attention condition determining or detection. User attention and non-attention conditions may be indicated by non-automatic user controlled or manual mechanisms. For example a key or control on the device which is manually operable by the user. This may be actuated for example when a user having a VoIP call on a desktop computer temporarily attends to a colleague interruption outside their office. In another example of non-proximity based detection of a user attention condition, a pressure or other sensor in a user headset may be used to automatically detect when the headset has been removed and when it has been replaced on the user's head. As a further example, a user non-attention condition might be automatically detected in response to situations outside the user's control, for example background noise levels or distortion or other disturbances on the audio channel.

Various audio channels may be used to carry the audio information, for example a broadcast channel used for streaming media or a duplex channel for interactive voice communications such as a phone conference. Typically the electronics device will be a phone and the audio information received using a voice based channel, such as PSTN, cellular and VoIP type connections.

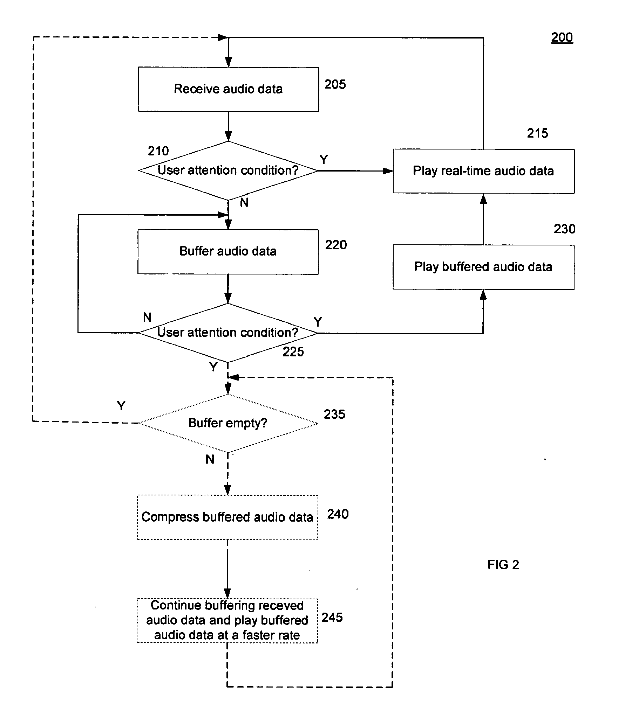

Figure 2 illustrates a method for operating the control functionality 120 of figure 1. A user of an electronics device 100 may opt into or out of this proximity detection method, for example using a switch or on-screen menu on the device. The method (200) receives audio information from an audio source (205), and determines whether a user attention condition exists (210). As discussed above, various user attention conditions can be defined, for example that a sensor 105 is detecting an object within a predetermined range. If such a condition is detected (210Y), the audio information is played to the user in real-time (215). This corresponds for example to sending received baseband audio information packets directly to a codec and the audio transducer 110, for example a speaker or headset earpiece.

If however a user non-attention condition is detected (210N), then the received audio data is forwarded to a buffer 115 for storing (220). The method (200) then periodically checks whether the user attention condition has returned (225), for example the phone 100 has been returned to a listening position. If a user attention condition is determined (225Y), then the buffered audio information is sent to the audio transducer for playing back to the user (230). The method then returns to playing back received audio information as it is received (215). If a user non-attention condition is still detected (225N), then the method returns to continue buffering the received audio data (220). The method may include a maximum buffer amount or predetermined maximum buffer size, in which case if this is reached the buffered audio information is discarded and the method returns to playing the received audio information in real or near real-time.

Alternatively, the buffer may be a constantly refreshed circular buffer that is continuously buffering the received audio information, At tag may be used to identify the start of a loss of user proximity, and when the user's head is again detected adjacent the device, the buffered audio information is replayed from the tag position. Buffered audio data from a short period (eg 1 - 5 seconds) before the tag position could also be played in order to put the "missed" audio in context for the user by him to re-listen to the last portion of audio heard before the device was moved away from the user's head.

An extension to the above method (200) is shown in dashed outline, and provides for the buffered audio information to be played back to the user at a faster rate such that the user can "catch-up" with the real time received audio information. At step (225), following buffering (220), if a user attention condition is now detected (225Y), the method compresses the buffered audio data (240), and therefore plays this back to the user at a faster rate than the real time received audio information (245). The method (200) continues to buffer received audio information as the compressed audio information is played back, and returns to check whether the buffer has any audio information left (235). If not (235N), then the method returns to receiving and playing the received audio data in real time (205). If there is still buffered audio (235Y), the method continues to compress this (240) and play back at a faster rate whilst continuing to buffer any received audio (245) until the buffer is cleared.

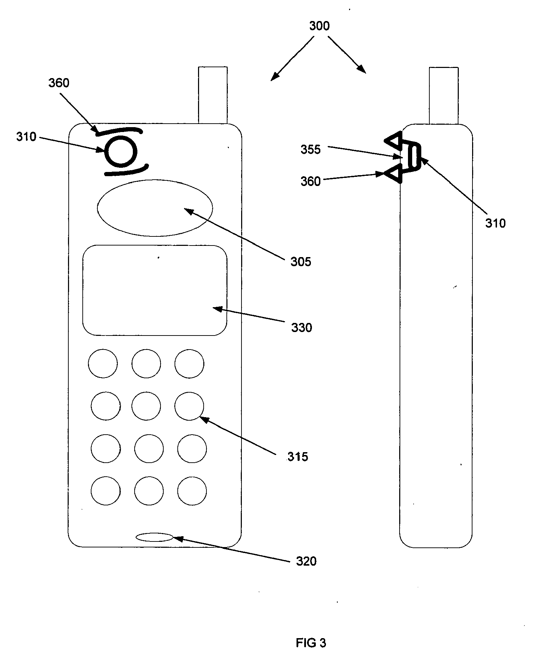

Figure 3 illustrates a phone according to an embodiment in more detail. The phone 300 is shown both in plan view and side view, and comprises a speaker 310, a display screen 330, keys 315, a microphone 320, and a proximity sensor 305. The proximity sensor 305 is located adjacent the speaker 310, and spaced apart from the keys 315. This reduces the likelihood of the sensor detecting fingers actuating the keys, as opposed to a head with ear adjacent the speaker 310.

In alternative arrangements however, the sensor 305 could be located anywhere on the phone if it and/or the associated control functionality was sufficiently "intelligent" to recognise a head as opposed to other objects such as fingers for example. This can be accomplished using movements of the phone as discussed in greater detail further below.

The phone 300 may also comprise false detection avoidance measures or means such as a false detection avoidance structure having for example one or more ridges 360 and/or a recess 355 into which the proximity sensor is located. The ridges 360 are a user clue similar to those used on camera phones to try alert a user to avoid putting their fingers over the camera lens, or in this case the proximity sensor 305. Locating the sensor 305 in a recess 355 reduces the sensing angle of the sensor so that it only detects objects directly in front of it, which further reduces the likelihood of detecting nearby fingers, for example resting on the screen 330, or possibly even speaker 310. However positioning an ear against the speaker 310 would necessarily mean a part of the user's head was positioned directly in front of the opening of the sensor recess 355.

The sensor 305 may be any suitable proximity sensor, that is a sensor which is capable of determining whether an object is within a certain range; for example 5 cm. Determining a range threshold may require monitoring and interpretation of "raw" sensor output signal levels by the proximity functionality as is known. Example sensor types include infra-red and capacitance sensors, however other sensor types may alternatively be used.

In another embodiment, the buffering is not done on the local device or phone 100 or 300, but is performed at the audio source 160; for example at a media streaming server. Software or hardware based functionality (120 in figure 1) within the phone, can be configured to signal the server when a change in proximity conditions is determined. For example the phone may monitor the sensor for changes corresponding to an object moving within a threshold range, or outside of it - for example a head moving away from the sensor which corresponds to the user moving the phone to a position where they can access the keys, and a head moving into the threshold range corresponding to the user moving the phone away from the key actuating position and back to a listening position.

The level of intelligence within the phone can vary from extremely limited, for example simply signalling changes in proximity condition, or sensor readings, to more sophisticated such as signalling a listening position or a user non-attention position to the server, possibly using in-band audio information such as DTMF signalling. This may be combined with other sensor readings, for example rotation, orientation and movement sensors which together with the proximity sensor readings may provide more resilience against false detection of objects other than the user's head/ear; for example fingers during key actuation. The use of movement detectors in order to imply a proximity condition is discussed in more detail below.

Figure 4b illustrates the rotation movements the phone will go through, in addition to position translation, when moved by the user between the two positions of figure 4a. It can be seen that the user will likely rotate (Ry) the phone about the Y axis in turning the phone from the side of the head to the front of the head. The user will also likely rotate (Rx) the phone in the X axis when moving the phone from the head height level to about chest height, in order to angle the phone away from the user slightly to make the plane of the front of the phone more perpendicular to the user's direction of viewing. This maximises the apparent size of the keypad in order to more easily see and actuate the keys.

One or more of these expected rotation movements can be used alternatively or in addition to the above direct proximity sensing in order to infer the proximity of the head or ear of the user to the phone or in other words determine a user attention condition. Additionally or alternatively, displacement movements (ie non-rotational) could be used to determine a change of states or proximity conditions. For example rotations Ry and Rx both within a range of rotations could be used, optionally with a distance displacement, in order to signal a change from key actuation mode to listening mode. Accelerometers could be used to detect these movements and rotations as would be appreciated by those skilled in the art. Suitable intelligence in the phone 100 and/or the remote server 160 could then be used to interpret the received data in order to determine the current proximity condition. Such a comprehensive approach using multiple "clues" about the current or next likely status of the mobile device can be used to increase the system's robustness against false head detection.

Whilst the embodiments have been described with respect to participating in phone conference calls and listening to streamed audio or an Internet radio station, other systems using an audio source and an electronics device for receiving audio information could alternatively be used, where there is a desire to control delivery of the audio information. For example, a user may have set up a lecture streaming session, which is only started when the system detects the right user attention condition, for example the phone against the user's ear. Furthermore the audio source may be signalled to pause or delay sending of further audio information when the phone is moved away from the user's ear; and then signalled to continue when the phone returns to the listening position.

Examples of other applications for the embodiments include audio webcast of a lecture or briefing; buffering playout of a message from voicemail so a user can get a pen and write a phone number in a long message without replaying the whole message from the start; write down a train time from a long list played over the phone; write down a flight time / flight number from a long list; pause a traffic report readout so a user can consult a map to locate a holdup location; pause an automated readout of a statement /booking reference to allow cross-checking with a paper invoice / record

In another embodiment, the received audio information is received from an application on the receiving device, for example an MP3 player. Thus the locally generated audio information can be delayed or buffered when a user non-attention condition is determined.

Whilst the embodiments have been described with respect to audio signals or information, they may also be applied to other media systems, signals or information, for example video signals such as might be used in a video phone and/or a TV broadcast.

For example, a proximity detection system might be applied to a personal video recorder (PVR) such as the well known TiVo^{™} brand, and which detects when a (or all) user(s) watching a TV broadcast leaves the room. The PVR can then be configured to start recording (buffer) the broadcast in order to allow the user to watch this when they return to the room. Detecting the user leave and/or return to the proximity of the PVR could be automatically implemented using a PIR (passive infra red) sensor for example.

In another example, an automatic user non-attention condition might be detected which causes a device having a media transducer such as a display screen and speaker to pause or buffer received media signals or information, and to play this buffered media information back to a user when a user attention condition is detected. User attention and non-attention conditions could be detected using the object sensing and/or predetermined movement sensing described above with respect to some audio-only applications, and applied to a video-phone device for example. This may require the range of the proximity sensor to be adjusted as normally a user of a video phone would not hold it against their ear or head. An infra red sensor might detect whether an object within a certain temperature range is within say 1m of the device. Alternatively, a room sensor such as a PIR sensor applied to a PVR could be used, and which detects whether a room in which the device is located is empty or not. Alternatively floor sensors or even room door opening sensors could be used.

In another example, a duplex media channel is established which allows for buffering of received media information in an interactive application such as a video conference. This allows a media transducing device to delay the playing of certain parts of received media information, for example the last few seconds of a video conference when the video phone was away from the user. This may be detected automatically, or the user may manually switch the device into a delay or buffer mode. Once the user is ready to receive the media information again, the buffered media information is transduced by the device for the user, for example by playing pictures on the display screen and sound on the speaker.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of controlling the provision of media information from a media source to the user of an electronics device having a media transducer for transducing the media information, the method comprising:
receiving media information from the media source;
buffering the received media information in response to determining a user non-attention condition;
transducing the buffered media information in response to determining a user attention condition;
wherein the user non-attention condition and/or the user attention condition are determined automatically.

2. A method according to claim 1, wherein the media information is audio information, and wherein the media transducer is an audio transducer.

3. A method according to claim 1 or 2, wherein the user attention and non-attention conditions correspond to user proximity and non-proximity conditions respectively.

4. A method according to claim 3, wherein determining the proximity condition comprises detecting an object within a predetermined range of the media transducer.

5. A method according to any one preceding claim, wherein the buffered media information is time compressed before transducing.

6. A method according to any one preceding claim, wherein the electronics device is a phone and the media data corresponds to a conference call.

7. A method according to any one preceding claim wherein the buffering is terminated after a predetermined amount of media information is buffered and the buffered media information is discarded.

8. A method according to any one preceding claims, wherein the receiving media information comprises establishing a duplex media channel for additionally transmitting media information from the electronics device to the media source.

9. A device for controlling the provision of media information from a media source to a user; the device comprising:
a media transducer for transducing the media information;
a receiver for receiving media information from the media source
a buffer circuit arranged to buffer the received media information in response to determining a user non-attention condition;
the device being arranged to transduce the buffered media information in response to determining a user attention condition;
the device being further arranged such that the user non-attention condition and/or the user attention condition are determined automatically.

10. A device according to claim 9, wherein the media information is audio information and the media transducer is an audio transducer.

11. A device according to claim 9 or 10, wherein the user attention and non-attention conditions correspond to user proximity and non-proximity conditions respectively.

12. A device according to claim 11, further comprising a sensor for detecting an object within a predetermined range of the media transducer and corresponding to a user proximity condition.

13. A device according to any one of claims 9 to 12, wherein the receiver comprises means for establishing a duplex media channel for additionally transmitting media information from the electronics device to the media source.

14. A carrier medium carrying processor code which when executed on a processor is arranged to carry out a method according to any one of claims 1 to 8

15. A system for controlling the provision of media information from a media source to the user of an electronics device; the system comprising:
a media source having means for sending media information to the device;
a media transducer for transducing the media information for the user;
a receiver for receiving media information from the media source at the device;
a buffer circuit arranged to buffer the received media information in response to determining a user non-attention condition;
means for transducing the buffered media information in response to determining a user attention condition;
wherein the user non-attention condition and/or the user attention condition are determined automatically.
